# EUROPEAN PATENT SPECIFICATION

(11) **EP 2 995 990 B1**
(45) Date of publication and mention of the grant of the patent: **23.06.2021**
(21) Application number: 14794400.3
(22) Date of filing: 09.05.2014
(51) Int. Cl.: G02C 5/20, G02C 5/16, G02C 5/08, B29D 12/02, G02C 3/00, G02C 5/14, G02C 5/00

(54) **GLASSES WITH FLEXIBLE SIDEPIECE**
BRILLE MIT FLEXIBLEM SEITENBÜGEL
LUNETTES À BRANCHE SOUPLE

(30) Priority: 10.05.2013 ES 201330568
(43) Date of publication of application: 16.03.2016
(73) Proprietor: Eyewear From Barcelona, S.L., 08005 Barcelona (ES)
(72) Inventor: CABRÉ OZORES, Alejandro, E-08005 Barcelona (ES)
(74) Representative: Gallego Jiménez, José Fernando
(86) International application number: PCT/ES2014/000074
(87) International publication number: WO 2014/181010

(56) References cited:
- WO-A1-99/56942
- WO-A1-2011/068559
- CN-A- 102 023 396
- CN-U- 202 710 857
- CN-Y- 200 972 545
- DE-A1- 2 938 241
- DE-U1- 8 912 492
- DE-U1-202006 003 118
- ES-U- 1 054 274
- GB-A- 2 182 169
- JP-A- 2007 178 613
- KR-A- 20100 053 290
- US-A- 2 481 946
- US-A- 4 768 872
- US-A- 4 818 094
- US-A1- 2012 307 199
- US-B1- 6 182 334
- US-B1- 6 253 388
- US-B1- 8 025 396
- None

## Description

### Object of the invention

The invention, as stated the title of the present specification, relates to a glasses with flexible sidepiece, which provides a number of advantages derived from innovative structural and constitutive characteristics, which will be described in more detail later, that represent an improvement and a novelty within the field of application.

These glasses can additionally incorporate an adjustment system which allows a perimeter adjustment to be carried out on the contour of the head, achieving a light and distributed pressure to ensure a correct fixing, even under conditions of sharp movements like in sports, and a high degree of comfort.

More particularly, the object of the invention is focused on a glasses of the type for which the frame is opened by the bridge area and have as a sidepiece that connects, at the rear of the head, both portions of the frame, said sidepiece having the innovative characteristic to be made up from a flexible structure with specific areas of a different nature at the ends thereof and central portion to provide different degrees of flexibility that favor the bending thereof, to allow its storage and transportation in a conventional-sized case and, in turn, the suitable rigidity for adjustment to the sidepiece on the cars of the wearer. These glasses have other features aimed to ensure the fixation of the two parts of the frame, in the bridge area, in a specific position, avoiding possible misalignments or relative turns of the two parts of the frame during the use of glasses.

### Field of application of the invention

The field of application of the present invention falls within the sector of industry dedicated to the manufacture of glasses or spectacles, focusing particularly on the scope of the frames and arms.

### Background of the invention

As a reference to the current state of the art, it should be noted that glasses of the type that here concerned, consisting of, as stated, glasses with a frame that is opened and closed ahead, are widely known, using a connector, whether mechanical or magnetic, and which are held on the ears of the wearer on both sides of the head with a sidepiece which is a single piece that remains closed at the rear of the head, thus keeping connected both sides of the frame that is separated ahead to put in and take off.

Said sidepiece, however, formed usually by a piece of plastic material that is connected at the respective ends to a small arm or coupling piece which, in turn, connects articulately to the external ends of each of the frame portions including each of the lenses, usually consists of a substantially rigid or semi-rigid part to be able to adjust as a conventional frame resting on the ears of the wearer and thus serve as a support to the frame once connected in the bridge and arranged on the nose.

The problem of the above sidepiece in said type of glasses lies in the difficulty to store them in a small case, since said sidepiece is rigid or semi-rigid, although, as it can be the case, is detachable, given that it is a piece that must surround the head of the wearer on its rear portion, occupies a considerable space and, therefore it is not suitable for being incorporated bent in a conventional case, but it should be used a case with rather larger size, with the disadvantage of storage that represents for the wearer.

To avoid said problem, a possible solution is the replacement of the sidepiece by an elastic strap as restraint system, however, said solution makes that for its correct use the band must be adjusted tensioned at the head of the wearer, since otherwise the glasses are not held. In this case, however, the discomfort is evident, because if it is not of glasses that are not for sports use, the need of which are tensioned and adjusted to the head of the wearer can produce obvious discomfort as well as disadvantages in hairstyle or if a hat is used. In addition, the band tension can increase the pressure in support of the bridge on the nose and facilitate the opening of the central connection of the frame. Documents of the prior art showing this kind or similar type of restraint systems are US6253388 B1, GB2182169 A or DE8912492 U1.

It would be desirable, therefore, having a type of sidepiece for said type of glasses which, without being totally elastic in order not to lose the shape and provide the suitable holding, has the necessary flexibility to be able to bent and store it in a case with conventional configuration and dimensions, an objective of the present invention being the development of said sidepiece.

Another drawback of the glasses provided with a sidepiece or back piece of a rigid or semi-rigid material is that they do not allow a proper fit to the contours of different heads, another aim of the invention being to provide the sidepiece of glasses with long-lasting and easy regulation adjustment means, for a fit of the sidepiece to the contour of the user's head, so that the user can perform various movements, both in everyday activities and in sports, without falling the glasses and without transmitting a high pressure in any of its support areas on the head.

Another drawback of the glasses that open and close by the middle region of the frame, by magnets, opposite to each other, is that the opposite parts of frames do not have centering and alignment means in the coupling position, which can cause a misalignment or slight phase angle of the two parts of the frame with respect to its appropriate coupling position.

It should be noted, moreover, that is unaware of glasses with flexible sidepiece having technical, structural, and constitutive characteristics similar to those of the glasses here proposed and as claimed. The most similar temples of the prior art are those disclosed in any of WO2011/068559 A1 or DE202006003118 U1.

### Explanation of the invention

Thus, the glasses with flexible sidepiece proposed by the present invention is configured as a significant novelty within their field of application since, in accordance with its implementation and exhaustively, the objectives previously indicated as suitable are satisfactorily reached, the characterizing details being those that distinguish them, suitably set down in the end claims accompanying the present specification.

In particular, what the invention proposes is glasses with flexible sidepiece according to claim 1.

The described semi-rigid sections of the sidepiece of the invention are made of plastic material, preferably of polyamide (e.g., TR90) or polycarbonate, consisting of an essentially rigid polymer but with a certain degree of elastic recovery, i.e., which allows a degree of flexibility and that, after being bent, without exceeding its elastic limit, always recovers its primitive form, being a material commonly used in frames for glasses, since due to its lightness properties, high strength and broad color options, is optimal for said use.

Meanwhile, the central area of the sidepiece is made of a thermoplastic elastomer material, preferably, of a thermoplastic elastomer (TPE) such as that of polyester or TPE-E (Thermoplastic Polyester Elastomer), TPE-O (of Polyolefins, such as EPDM), or thermoplastic rubber, among others.

The advantage of said materials, as well as the rest of thermoplastic elastomers, also referred to as thermoplastic rubbers, which are a class of copolymers or a physical mix of polymers (usually a plastic and a rubber) is that they give rise to materials with thermoplastic and elastomeric characteristics. Moreover, while most elastomers are thermosets, thermoplastics are in contrast relatively easy to use in manufacturing, for example, by injection molding. Thermoplastic elastomers also show both advantages typical of rubbery materials and plastic materials.

Thus, said central area of the sidepiece made of TPE has sufficient flexibility to be able to bend the sidepiece as in a conventional bending of the glasses, subsequently recovering its original form.

Therefore, and also in a preferred way, finally it should be noted that the sidepiece is obtained from a double injection process, such that it makes up a single-piece bimaterial element, formed with the cited two sections at its ends made of semi-rigid plastic and a central area made of elastomeric plastic, which gives the proposed sidepiece, in addition to the described advantage of flexibility in its central area and semi-rigidity in the area of the temples, on the one hand the advantage of high durability and structural strength and, on the other hand, the reduction of manufacturing cost.

The glasses of the present invention combine different innovative solutions for the development of an adjustable perimeter set system, allowing a distribution of the necessary fixing force as evenly as possible over the head, reducing the pressure on sensitive areas, in order to provide a good fit and in turn provide a high degree of comfort, thus avoiding possible discomfort during and after use. The first of these is the flexible sidepiece for connecting the arms, made of bimaterial, with a rigid area in the connection with the arms and a flexible area that adapts to the rear contour of the head.

Another relevant feature of the invention is the incorporation of an adjustment system in the connection between the arms and the sidepiece to ensure the correct fit regardless of the size and shape of the athlete's head. It also allows a more or less tight control of the adjustment depending on the type of sport and the abruptness of the movements, and at the same time on the taste of the athlete.

The function of adjustment of perimeter length is carried out in the connection between the arms and the sidepiece, through a guide-seating system with telescopic movement and with elements that perform the interlocking function in certain positions to provide necessary retention in every adjustment point. The common and differential feature of this element is that it comprises an area or part that performs the interlocking function and another zone or part has a perfectly elastic behavior. The combination of both provides a smooth glide, a precise interlocking and a proper retention and also ensures a much longer duration of the system. In the current existing systems, these functions are not differentiated: interlocking and elastic behavior, but the same elements perform both functions without having regions or additional elements for this purpose, this causes plastic deformations and wear during operation, so that these adjustment systems have limited durability and accuracy which reduces the lifetime of the glasses. This adjustment system may have different configurations, as shown in the attached example embodiments, being arranged between the arms and rigid end sections of the sidepiece. This adjustment system has the peculiarity of comprising a retaining element with a completely elastic behavior to perform the interlocking function in the different adjustment points existing between the ends of the sidepiece and the respective arms of the glasses.

In addition, the glasses of the present invention incorporate in the area of separation by the bridge of the frame, magnets that provide them with ease to put on and remove the glasses, and means for centering the two parts of the frame.

Through the combination of the three concepts: separation by the bridge, flexible bimaterial sidepiece and adjustment system, a perimeter optimal fit to the contour of the user's head is achieved, distributing evenly the pressure for better fit and comfort and they can be adjusted to every head contour and pressure easily tailored to the user, and also they are glasses easy to place and remove.

For these reasons, said glasses are ideal for use in both daily activities and sports activities, in which the movements require a good fixation of the glasses, which is also accompanied by a level of comfort that allows an extended use without suffering discomfort. In addition, the frame divided by the bridge considerably reduces the risk of injury in the event of a fall or impact, since it facilitates the detachment thereof at moments of risk.

They are also very appropriate for use in children as children's glasses, both for their comfort and safety in the event of impact or fall.

In the light of the above, it is found that the described flexible sidepiece for glasses represents an innovation of structural and constitutive characteristics unknown so far to this end, reasons which in combination with its practical utility, provide it with enough basis to obtain the exclusivity privilege which is applied for.

### Description of the drawings

In order to complement the description that is being carried out and with the object to help to a better understanding of the invention, a set of drawings is accompanied to the present specification as an integral part thereof, in which, with an illustrative and non-limiting character, the following has been represented:
- Figure 1.- It shows a perspective view of a preferred exemplary embodiment of the flexible sidepiece for the glasses with flexible sidepiece, object of the invention, which shows its general configuration and the main comprising parts and elements.
- Figure 2.- It shows a perspective view of glasses with front opening at the bridge area, with the sidepiece coupled thereto.
- Figure 3.- It shows a perspective view of the glasses shown in the preceding figure, which has been represented with the sidepiece in bent position, being appreciated that it is suitable for introduction into a conventional-sized case.
- Figure 4. It shows a profile partial view of the glasses according to the invention in which it can be seen schematically the telescopic adjustment means between one of the side arms of the glasses and the corresponding end of the flexible sidepiece.
- Figures 5, 6, and 7. They shows both details in plan view, sectioned by a horizontal plane in the area of telescopic connection between one of the arms and one of the semi-rigid ends of the sidepiece, having represented in said figures different means for its retention in different positions.
- Figure 8. It shows a profile partial view of a variant of embodiment of the telescopic coupling means between the arms of the glasses and the semi-rigid ends of the flexible sidepiece.
- Figure 9. It shows a profile view of opposing ends of an arm and the semi-rigid end of the flexible sidepiece in disassembled position.
- Figure 10. It shows a cross section in the coupling area of the arm and the flexible end of the sidepiece shown in Figure 7.
- Figures 11 and 12. They show respective frontal perspective views of an example embodiment of the glasses according to the invention with centering means in the separation region of the bridge.

### Preferred embodiment of the invention

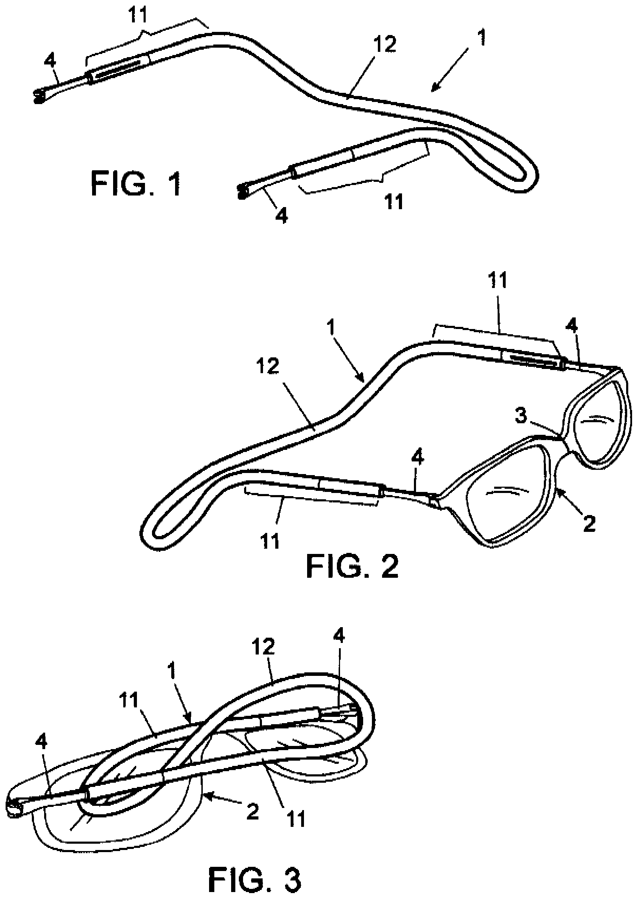

In Figures 1 to 3 it can be seen the features of an example embodiment of the glasses with flexible sidepiece, comprising the parts and elements listed and described in detail below.

Thus, as seen in said Figures, the glasses comprises a frame (2) that is separated at the bridge area (3), and a sidepiece (1) that is configured from a narrow, elongated part the ends of which are coupled to articulated connection means that, for example consisting of metal couplings (4) adjustable and insertable through simple pressure at the ends of the sidepiece (1), connect it to the respective external ends of the cited frame (2), and, preferably made from an injection molding process, comprising respective semi-rigid sections (11) and a flexible central area (12).

The semi-rigid sections (11) of the sidepiece (1) corresponds to two sections that include a substantially straight section of the sidepiece at their respective ends and that, situated parallel to each other, corresponding to the part at the temples of wearer when this wears glasses, for the support on the ears thereof, and being suitable for thus allowing the support of the glasses.

The flexible central area (12) of the sidepiece, corresponding to the rest of the part, specifically to the portion of the part that subsequently surrounds the head of the wearer, has a certain degree of flexibility such that allows the sidepiece (1) to be bent until the glasses can be inserted in a conventional storage bag or case, that is, in a way that the bent sidepiece does not project from the space taken up by the frame (2), as shown the Figure 3.

The semi-rigid sections (11) of the ends of the sidepiece (1) are made of plastic material, preferably polyamide, polycarbonate or specifically in this case polymer TR90, and the flexible central area (12) is elastomer material, preferably thermoplastic polyester elastomer (TPE-E), rubber or polyolefin, the sidepiece (1) having been obtained from a double injection process, in a way that makes up a single-piece bimaterial element, made up of the cited two sections at its ends of TR90 and a central area of TPE-E.

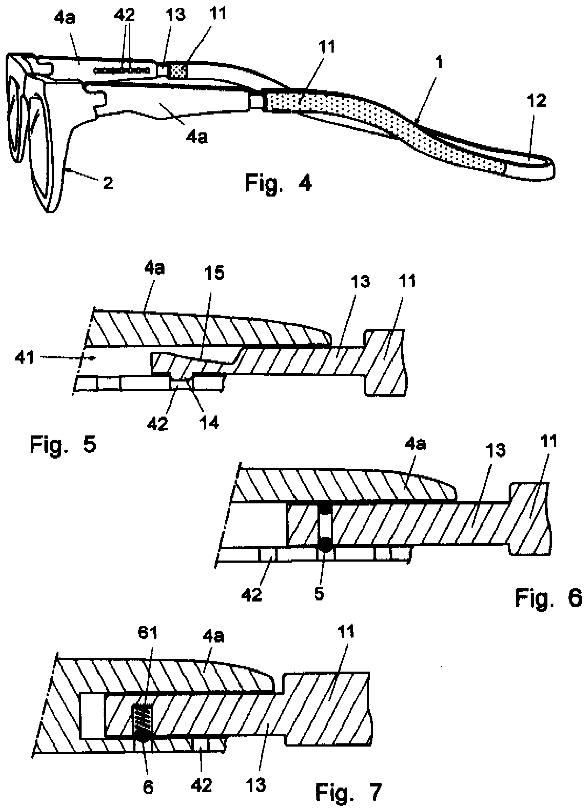

In the example of Figure 4, the articulated connection means for connecting the ends of the frame (2) with the bimaterial sidepiece (1), consist of arms (4a) of semi-rigid material, provided with a longitudinal passage (41), referenced in Figures 5, 6, and 7, for the telescopic assembly of a guide (13) defined in the corresponding semi-rigid section (11) of the sidepiece (1).

The aforementioned longitudinal passage (41) has notches or side openings (42) for anchoring in different positions a retaining element defined or mounted in the guide (13) of the corresponding semi-rigid section (11) of the sidepiece (1).

Specifically in Figure 5, the retaining element consists of a side stub (14) defined in a smaller section end portion (15), of the guide (13); so that said end portion (15) is flexible to allow the passage of the side stub (14) from one to another side opening (42) and performs the elastic function for proper operation.

In the example shown in Figure 6, the retaining element consists of a toroidal washer (5) made of rubber or other clastomeric material set in a throat defined at the end of the corresponding guide (13) of the sidepiece (1). The shape and dimensions of the notches or side openings (42), along with the elastomeric behavior of the toroidal washer material perform the interlocking and elastic behavior functions characteristic of the system.

In the example shown in Figure 7, the retaining element is constituted by a retractable stop (6) that performs the function of interlocking, operated by a push spring (61) which carries out the elastic function.

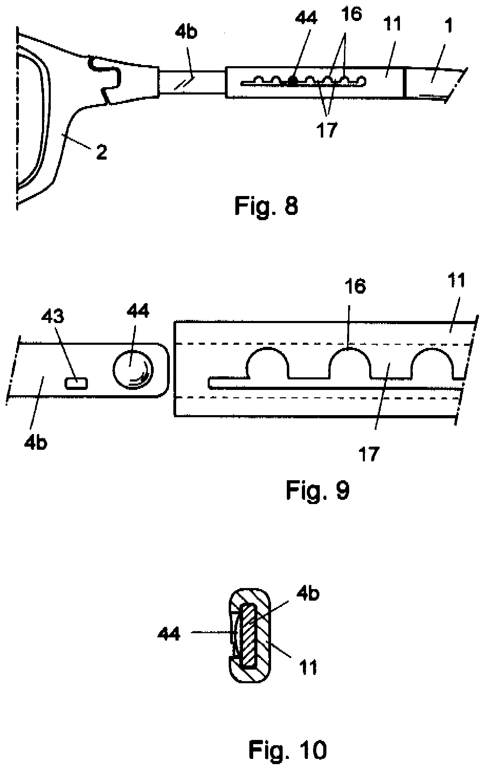

In Figures 8, 9, and 10, the articulated connection means consist of metal arms (4b) provided with a slide stop (43) and a side stub (44); said arms (4b) being telescopically mounted in a gap or passage defined in the corresponding semi-rigid end (11) of the sidepiece (1).

The gap defined in the semi-rigid sections (11) of the sidepiece (1) is provided with side openings (16) suitable for receiving therein the stub (44) of the corresponding arm (4b). Between the aforementioned side openings (16) there are flexible tabs (17) that are elastically deformed during the passage of the stub (44) of the arm (4b) (44) from one to another side opening (16).

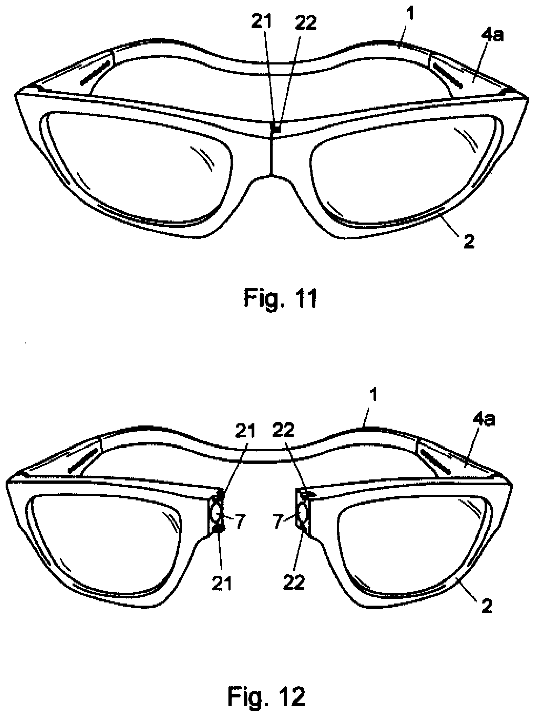

As can be seen in Figures 11 and 12, the parts of the glasses frame, separable by the bridge area, have, in opposing positions, centering and alignment means, constituted, in this case, by two pairs of complementary male/female arrangements (21 and 22) for their mutual coupling in a certain position, when the bridge of the frame is connected by the action of magnets (7) arranged in the facing areas of such portions of frame (2).

Having sufficiently described the nature of the present invention, as well as the way of putting it into practice, it is not considered necessary to further extend its explanation for any person skilled in the art to understand its scope and the advantages derived therefrom, stating that, within its essence, it can be put into practice in other embodiments which differ only in detail from the one indicated by way of example, and which are also covered by the protection which is sought provided that its fundamental principle is not altered, changed or modified.

## Claims

1. Glasses with flexible sidepiece, comprising: a frame (2) that is separated at the bridge area (3), and a sidepiece (1) that is configured from a narrow, elongated part the ends of which are coupled to articulated connection means that connect it to the respective external ends of the cited frame (2) and which is closed at the rear of the head, **characterized in that** said narrow, elongated part comprises:
- respective semi-rigid sections (11), suitable for allowing the support of the glasses on the temples of the wearer, wherein the semi-rigid sections (11) are made of polymer plastic material, and corresponding to the two sections that include a substantially straight section of the sidepiece (1) at their respective ends and are situated parallel to each other, corresponding to the part of the temples of the wearer when wearing the glasses; and
- a flexible central area (12), corresponding to the rest of the part, that is, to the portion of the part that subsequently surrounds the head of the wearer, wherein said central area (12) is made of thermoplastic elastomer material and has a higher degree of flexibility than that of the semi-rigid sections (11) such that allows the sidepiece (1) to be bent until the glasses can be inserted in a conventional storage bag or case, and in a way that the bent sidepiece (1) does not protrude from the space taken up by the frame (2),
wherein the sidepiece (1) is configured to not lose its shape after being bent and to provide a suitable holding.

2. Glasses with flexible sidepiece, according to claim 1, **characterized in that** the semi-rigid sections (11) of the ends of the sidepiece are made of TR90, and the flexible central area (12) is made of thermoplastic polyester elastomer.

3. Glasses with flexible sidepiece, according to claim 2, **characterized In that** it has been obtained from a double injection molding process and makes up a single-piece bimaterial element.

4. Glasses with flexible sidepiece, according to claim 1-3, **characterized in that** the articulated connection means that connect the respective external ends of the frame (2) to the sidepiece (1), consist of metal couplings (4) adjustable and insertable through pressure at said ends of the sidepiece (1).

5. Glasses with flexible sidepiece, according to claim 1, **characterized In that** the semi-rigid sections (11) of the ends of the sidepiece are made of polyamide or polycarbonate, and the flexible central area (12) is made of thermoplastic polyester elastomer, rubber or polyolefin.

6. Glasses with flexible sidepiece, according to claim 1, **characterized in that** it comprises an adjustment system in which the articulated connection means consist of arms (4a) of semi-rigid material provided with a longitudinal passage (41) for the telescopic assembly of a guide (13) defined in the corresponding semi-rigid section (11) of the sidepiece (1), and with side openings (42) for anchoring in different adjustment positions a retaining element defined or mounted in the guide (13) of the corresponding semi-rigid section of the sidepiece (1).

7. Glasses with flexible sidepiece, according to claim 6 **characterized in that** the retaining element consists of a smaller section end portion (15), of the guide (13), the end portion (15) of which has a side stub (14) mountable in any of the side openings (16) of the corresponding arm (4a).

8. Glasses with flexible sidepiece, according to claim 6 **characterized in that** the retaining element consists of a toroidal washer (5) made of rubber or other elastomeric material set in a throat defined at the end of the corresponding guide (13) of the sidepiece (1).

9. Glasses with flexible sidepiece, according to claim 6 **characterized in that** the retaining element consists of a retractable stop (6) operated by a push spring (61).

## Patentansprüche

1. Brille mit flexiblem Seitenstück, umfassend: einen Rahmen (2), der im Brückenbereich (3) getrennt ist, und ein Seitenstück (1), das aus einem schmalen, länglichen Teil konfiguriert ist, dessen Enden mit Gelenkverbindungsmitteln gekoppelt sind, die ihn mit den jeweiligen äußeren Enden des Rahmens (2) verbinden und der am Hinterkopf geschlossen ist, **dadurch gekennzeichnet, dass** das schmale, längliche Teil umfasst:
- jeweilige halbstarre Abschnitte (11), die geeignet sind, um die Brille an den Schläfen des Trägers abzustützen, wobei die halbstarren Abschnitte (11) aus Polymerkunststoff hergestellt sind und den zwei Abschnitten entsprechen, die an ihren jeweiligen Enden einen im Wesentlichen geraden Abschnitt des Seitenstücks (1) einschließen und parallel zueinander angeordnet sind, entsprechend dem Teil der Schläfen des Trägers beim Tragen der Brille; und
- einen flexiblen zentralen Bereich (12), der dem Rest des Teils entspricht, d. h., dem Abschnitt des Teils, der anschließend den Kopf des Trägers umgibt, wobei der zentrale Bereich (12) aus thermoplastischem Elastomermaterial hergestellt ist und einen höheren Grad an Flexibilität aufweist als derjenige der halbstarren Abschnitte (11), so dass das Seitenstück (1) gebogen werden kann, bis die Brille in eine herkömmliche Aufbewahrungstasche oder -hülle eingefügt werden kann und derart, dass das gebogene Seitenstück (1) nicht aus dem vom Rahmen (2) eingenommenen Raum herausragt;
wobei das Seitenstück (1) konfiguriert ist, um seine Form nach dem Biegen nicht zu verlieren und eine geeignete Halterung bereitzustellen.

2. Brille mit flexiblem Seitenstück nach Anspruch 1, **dadurch gekennzeichnet, dass** die halbstarren Abschnitte (11) der Enden des Seitenstücks aus TR90 hergestellt sind und der flexible zentrale Bereich (12) aus thermoplastischen Polyesterelastomer hergestellt ist.

3. Brille mit flexiblem Seitenstück nach Anspruch 2, **dadurch gekennzeichnet, dass** dieses aus einem Doppeleinspritz-Formverfahren erhalten wird und ein einstückiges Zwei-Material-Element erzeugt.

4. Brille mit flexiblem Seitenstück nach Anspruch 1-3, **dadurch gekennzeichnet, dass** die Gelenkverbindungsmittel, welche die jeweiligen äußeren Enden des Rahmens (2) mit dem Seitenstück (1) verbinden, aus Metallkupplungen (4) bestehen, die durch Druck auf die Enden des Seitenstücks (1) einstellbar und einführbar sind.

5. Brille mit flexiblem Seitenstück nach Anspruch 1, **dadurch gekennzeichnet, dass** die halbstarren Abschnitte (11) der Enden des Seitenstücks aus Polyamid oder Polycarbonat hergestellt sind und der flexible zentrale Bereich (12) aus thermoplastischen Polyesterelastomer, Kautschuk oder Polyolefin hergestellt ist.

6. Brille mit flexiblem Seitenstück nach Anspruch 1, **dadurch gekennzeichnet, dass** es ein Einstellsystem umfasst, bei dem die Gelenkverbindungsmittel aus Armen (4a) aus halbstarrem Material bestehen, die mit einem Längsdurchgang (41) für die Teleskopanordnung einer Führung (13) bereitgestellt sind, die in dem entsprechenden halbstarren Abschnitt (11) des Seitenstücks (1) definiert ist, und mit Seitenöffnungen (42) zum Verankern in unterschiedlichen Einstellpositionen ein Halteelement, das in der Führung (13) des entsprechenden halbstarren Abschnitts des Seitenstücks (1) definiert oder montiert ist.

7. Brille mit flexiblem Seitenstück nach Anspruch 6, **dadurch gekennzeichnet, dass** das Halteelement aus einem Endabschnitt (15) mit kleinerem Querschnitt der Führung (13) besteht, dessen Endabschnitt (15) einen Seitenstutzen (14) aufweist, der in jeder der Seitenöffnungen (16) des entsprechenden Arms (4a) montierbar ist.

8. Brille mit flexiblem Seitenstück nach Anspruch 6, **dadurch gekennzeichnet, dass** das Halteelement aus einer Ringscheibe (5) aus Kautschuk oder einem anderen elastomeren Material besteht, die in einem am Ende der entsprechenden Führung (13) des Seitenstücks (1) definierten Hals angeordnet ist.

9. Brille mit flexiblem Seitenstück nach Anspruch 6, **dadurch gekennzeichnet, dass** das Haltelement aus einem einziehbaren Anschlag (6) besteht, der durch eine Druckfeder (61) betätigt wird.

## Revendications

1. Lunettes avec branche souple, comprenant: une monture (2) qui est séparée au niveau de la zone de pont (3), et une branche (1) qui est configurée à partir d'une pièce étroite, allongée dont les extrémités sont couplées à des moyens de raccordement articulés qui la raccordent aux extrémités externes respectives de la monture citée (2) et qui est fermée à l'arrière de la tête, **caractérisées en ce que** ladite pièce étroite, allongée comprend :
- des sections semi-rigides respectives (11), adaptées pour permettre le support des lunettes sur les tempes du porteur, dans lesquelles les sections semi-rigides (11) sont constituées de matière plastique polymère, et correspondant aux deux sections qui comportent une section sensiblement droite de la branche (1) à leurs extrémités respectives et sont situées parallèlement l'une à l'autre, correspondant à la partie des tempes du porteur lors du port des lunettes ; et
- une zone centrale souple (12), correspondant au reste de la pièce, à savoir, à la partie de la pièce qui entoure ensuite la tête du porteur, dans lesquelles ladite zone centrale (12) est constituée d'un matériau élastomère thermoplastique et a un degré de souplesse plus élevé que celui des sections semi-rigides (11) de sorte à permettre à la branche (1) d'être pliée jusqu'à ce que les lunettes puissent être insérées dans un sac ou étui de rangement classique, et de manière à ce que la branche souple (1) pliée ne dépasse pas de l'espace occupé par la monture (2),
dans lesquelles la branche (1) est configurée pour ne pas perdre sa forme après avoir été pliée et pour fournir un maintien approprié.

2. Lunettes avec branche souple, selon la revendication 1, **caractérisées en ce que** les sections semi-rigides (11) des extrémités de la branche sont constituées de TR90, et la zone centrale souple (12) est constituée d'élastomère thermoplastique de polyester.

3. Lunettes avec branche souple, selon la revendication 2, **caractérisées en ce qu'**elles ont été obtenues à partir d'un procédé de moulage par double injection et constituent un élément bi-matière monobloc.

4. Lunettes avec branche souple, selon les revendications 1 à 3, **caractérisées en ce que** les moyens de raccordement articulés qui raccordent les extrémités externes respectives de la monture (2) à la branche (1), sont composés de raccords métalliques (4) réglables et insérables par pression auxdites extrémités de la branche (1).

5. Lunettes avec branche souple, selon la revendication 1, **caractérisées en ce que** les sections semi-rigides (11) des extrémités de la branche sont constituées de polyamide ou de polycarbonate, et la zone centrale flexible (12) est constituée d'élastomère de polyester thermoplastique, de caoutchouc ou de polyoléfine.

6. Lunettes avec branche souple, selon la revendication 1, **caractérisées en ce qu'**elles comprennent un système de réglage où les moyens de raccordement articulés sont composés de bras (4a) en matériau semi-rigide pourvus d'un passage longitudinal (41) pour l'assemblage télescopique d'un guide (13) défini dans la section semi-rigide correspondante (11) de la branche (1), et avec des ouvertures latérales (42) pour ancrer dans différentes positions de réglage un élément de retenue défini ou monté dans le guide (13) de la section semi-rigide correspondante de la branche (1).

7. Lunettes avec branche souple, selon la revendication 6 **caractérisées en ce que** l'élément de retenue est composé d'une partie d'extrémité de section plus petite (15), du guide (13), dont la partie d'extrémité (15) a un talon latéral (14) pouvant être monté dans l'une quelconque des ouvertures latérales (16) du bras correspondant (4a).

8. Lunettes avec branche souple, selon la revendication 6 **caractérisées en ce que** l'élément de retenue est composé d'une rondelle toroïdale (5) constituée de caoutchouc ou autre matériau élastomère placée dans une gorge définie à l'extrémité du guide correspondant (13) de la branche (1).

9. Lunettes avec branche souple, selon la revendication 6 **caractérisées en ce que** l'élément de retenue est composé d'une butée escamotable (6) actionnée par un ressort de poussée (61).
